# EUROPÄISCHE PATENTANMELDUNG

(11) **EP 2 050 884 A2**
(43) Veröffentlichungstag der Anmeldung: **22.04.2009**
(21) Anmeldenummer: 08018174.6
(22) Anmeldetag: 16.10.2008
(51) Int. Cl.: E04B 1/80

(54) **Ummanteltes Vakuumisolationspaneel**

(30) Priorität: 16.10.2007 DE 202007014564 U
(71) Anmelder: Porextherm-Dämmstoffe GmbH, 87437 Kempten (DE)
(72) Erfinder: Reinhardt, Stefan, 87490 Haldenwang (DE); Bartel, Walter, 87437 Kempten (DE); Eberhardt, Hans-Frieder, 89537 Giengen/Brenz (DE)
(74) Vertreter: Fiener, Josef

(57) **Zusammenfassung**

Zur Verbesserung der Verbaubarkeit und der mechanischen Stabilität eines Vakuumisolationspaneels (10) mit einem mikroporösen Stützkörper (20) in einer gasdichten Umhüllung (11), wobei das Vakuumisolationspaneel (10) wenigstens eine zusätzliche Schicht (30) außen auf der Umhüllung (11) aufweist, wird vorgeschlagen, dass die Schicht (30) durch Auftrag eines elastoviskosen Materials gebildet ist, wobei die Schicht (30) das Vakuumisolationspaneel (10) allseitig ummantelt. Zudem wird ein Wärmedämmsystem aus mehreren derartigen Vakuumisolationspaneelen (10) vorgeschlagen, wobei die Vakuumisolationspaneele (10) mit einer Unterlage, insbesondere mit einer Bitumenbahn (61) verbunden, insbesondere verklebt sind.

## Beschreibung

Die Erfindung betrifft ein Vakuumisolationspaneel mit den obarbegrifflichen Merkmalen des Anspruchs 1.

Vakuumisolationspaneele, die über einen Stützkörper aus mikroporösen Materialien verfügen, eignen sich für zahlreiche Wärmedämmanwendungen in einem weiten Temperaturspektrum. Die Grundlage für die hocheffiziente Dämmwirkung der Vakuumisolationspaneele bildet in der Regel ein Wärmedämmformkörper aus hochdisperser Kieselsäure. Hierbei bilden sich zwischen den mikro- oder nanoporösen Primärpartikeln nur punktförmige Übergänge, sodass die Wärmeleitung durch möglichen Festkörperkontakt weitgehend reduziert wird. Der gegenüber dem Umgebungsdruck abgesenkte Innendruck der Vakuumisolationspaneele minimiert im Zusammenspiel mit den Mikro- oder Nanoporen außerdem die Wärmeübertragung durch Konvektion. Durch Zugabe von Infrarot-Trübungsmitteln zu den Ausgangssubstraten können Wärmetransportprozesse durch Absorption und Reflektion der Strahlung zusätzlich reduziert werden. Durch die Verwendung von Wärmedämmformkörpern auf Basis hochdisperser Kieselsäure kann somit ein sehr viel höherer Wirkungsgrad als mit lsolierwerkstoffen wie beispielsweise Mineralfasern, Feuerleichtsteinen oder organischen Dämmplatten erreicht werden. Darüber hinaus sind derartige Wärmedämmformkörper oder -platten sehr leicht und eignen sich daher besonders für Anwendungen, bei denen eine gute Wärmedämmleistung bei geringem Gewicht angestrebt wird, wie z. B. bei der Dämmung von begehbaren Flächen oder von Dächern. Hierbei erweist sich aber die geringe mechanische Stabilität der Vakuumisolationspaneele, die nur mit einer gasdichten Folie umhüllt sind, als problematisch.

Eine Möglichkeit, diesem Problem ansatzweise zu begegnen, zeigt die WO 01/66864, in der die Ummantelung eines Vakuumisolationspaneels mit einem geschäumten Material vorgeschlagen wird. Die vorgestellten Wärmedämmelemente eignen sich v.a. zur Dämmung von Außenfassaden und weisen aufgrund der verwendeten Ummantelungsmaterialien nur eine geringfügig verbesserte mechanische Stabilität auf. Bei der Verwendung im Außenbereich oder in Bereichen mit erhöhtem Feuchtigkeitsanfall müssen diese Vakuumisolationspaneele zudem vor oder nach dem Einbau zusätzlich einer Oberflächenbahandlung unterzogen werden, um das Schaummaterial vor eindringender Feuchtigkeit zu schützen.

Aufgabe der vorliegenden Erfindung ist es daher, Vakuumisolationspaneele mit guter mechanischer Stabilität zur Verfügung zu stellen, die geringes Gewicht, sehr gute Dichte-und Wärmedämmeigenschaften sowie eine einfache und kostengünstige Verbaubarkeit aufweisen.

Diese Aufgabe wird durch ein Vakuumisolationspaneel gemäß Anspruch 1 sowie ein Wärmedämmsystem gemäß Anspruch 11 gelöst. Vorteilhafte Weiterbildungen der Erfindung sind Gegenstand der abhängigen Ansprüche.

Die vorliegende Erfindung sieht vor, dass ein Vakuumisolationspaneel mit einem mikro- oder nanoporösen Stützkörper in einer gasdichten Umhüllung wenigstens eine zusätzliche Schicht außen auf der Umhüllung aufweist. Der mikroporöse Stützkörper wird dabei bevorzugt aus synthetischem Siliziumdioxid geformt. Möglich ist auch die Verwendung von gefällter Kieselsäure, pyrogener Kieselsäure und/oder Aerogelen, offenzelligem Polyurethanschaum, offenzelligem Polyisocyanuratschaum, Perliten oder Fasermaterialien als Ausgangsmaterial für den Stützkörper. Zur gasdichten Umhüllung des Stützkörpers können beispielsweise bahnförmige Hochbarrierefolien, in die der Stützkörper eingeschlagen wird, oder Beutel aus diesen Folien verwendet werden, die nach Einlegen des Stützkörpers evakuiert und verschweißt werden. Zur Verbesserung der Isolationseigenschaften können die Folien zusätzlich mit Beschichtungen aus Metall, metallisiertem Kunststoff oder metallischen Oxiden versehen werden. Das erfindungsgemäße Vakuumisolationspaneel ist **dadurch gekennzeichnet, dass** die Schicht außen auf der Umhüllung durch Auftrag eines elastoviskosen Materials gebildet ist und die Umhüllung allseitig ummantelt, Dieses zähelastische Material ermöglicht eine gewisse Biegsamkeit und kann auch eine gewisse Temperaturabhängigkeit zeigen, die gezielt eingestellt werden kann, um eine Art Selbstheilung der elastoviskosen Schicht zu erreichen.

Als besonders empfehlenswert wird angesehen, wenn die Schicht aus Bitumen, kunststoffmodifiziertem Bitumen, Epoxydharz, Polycarbonat, Acrylat, Silikon und/oder Polyesterharz besteht. Aufgrund seiner Materialeigenschaften bietet die Verwendung von Bitumen oder bitumenbasierten Materialien, wie beispielsweise Schaumbitumen oder Fluxbitumen, zum einen die Möglichkeit, die empfindlichen Vakuumisolationspaneele allseitig gegen mechanische Einwirkungen zu schützen. Zum anderen bildet eine bituminöse Beschichtung eine wasserbeständige und gegenüber nicht-oxidierenden Säuren und Basen chemisch stabile Schicht auf den Außenflächen der Vakuumisolationspaneele und verbessert somit die Einsatzmöglichkeiten des Vakuumisolationspaneels für Aufgaben im Außen- und Feuchtbereich. Das erfindungsgemäße Vakuumisolationspaneel kann beispielsweise zur Dämmung von Dächern und hierbei insbesondere zur Dämmung von Flachdächern, die bauartbedingt besonders anfällig für den Eintritt von Feuchtigkeit sind, verwendet werden. Durch die Verwendung von kunststoffmodifiziertem Bitumen und Polyesterharzen lassen sich die Eigenschaften des umhüllten bzw, ummantelten Vakuumisolationspaneels hinsichtlich Feuchtigkeitsdichte und mechanischer Stabilität noch weiter verbessern. Denkbar ist auch der mehrlagige Aufbau der Schicht, d.h. dass beispielsweise zunächst eine Umhüllung des Vakuumisolationspaneels mit einem Polyesterharz erfolgt und das so umhüllte Vakuumisolationspaneel anschließend mit einer weiteren Schicht aus Bitumenmaterial umhüllt, umgossen oder ummantelt wird.

Des Weiteren wird es als günstig erachtet, wenn die Schicht durch Sprühen, Tauchen und/oder Streichen aufgetragen wird. Hierfür wird die Materialviskosität des Schichtmaterials so eingestellt, dass ein streich-, sprüh- oder tauchfähiges Material vorliegt, das nach dem Aushärten die gewünschten Schutz- bzw. Stabilisierungseigenschaften zeigt.

Es ist in diesem Zusammenhang möglich, dass das Vakuumisolationspaneel direkt nach dem Evakuier- und Verschweißvorgang wie in einer Lackierstraße auf Trägern oder Rosten gelagert vollautomatisch an Sprühdüsen vorbeigeführt wird, aus denen das verflüssigte Schichtmaterial austritt und das Vakuumisolationspaneel allseitig benetzt. Über die Sprühdüsen sowie die Transportgeschwindigkeit kann der Materialauftrag und somit die Schichtdicke gesteuert werden. Über Lage und Ausrichtung der Düsen kann auch festgelegt werden, dass alle Flächen des Vakuumisolationspaneels beschichtet werden.

Neben dem vollautomatisierten Schichtauftrag ist auch ein manueller Auftrag möglich. Dieser kann dabei aus einem druckbeaufschlagten Großbehälter mit angeschlossener Lackierpistole manuell auf das auf einer Fördereinrichtung transportierte oder einer Lagervorrichtung ausgelegte Vakuumisolationspaneel erfolgen. Das Aufsprühen des Schichtmaterials setzt voraus, dass sich das suspendierte Material besonders fein vernebeln lässt und somit möglichst keine Partikel enthält. Da die Viskosität des elastoviskosen Beschichtungsmaterials u.a. durch Temperaturbeaufschlagung veränderbar ist, sollte der Vorratsbehälter beheizbar ausgebildet sein, um eine Viskositätsänderung bzw. ein möglicherweise ungewolltes vorzeitiges Aushärten des Schichtmaterials zu unterbinden.

Soll die Suspension durch Tauchen auf das Vakuumisolationspaneel aufgebracht werden, kann dieses direkt aus der Evakuier- und Verschweißvorrichtung kommend in ein Tauchbad überführt werden. Es können aber auch mehrere Vakuumisolationspaneele gleichzeitig, beispielsweise durch Absenken einer entsprechenden Halterung oder eines Korbes in ein (beheiztes) Tauchbad, mit dem verflüssigten Beschichtungsmaterial überzogen werden.

### Eine weitere bevorzugte Ausführungsform der Erfindung sieht vor, dass die Schicht durch

Umgießen des Vakuumisolationspaneels mit dem elastoviskosen Material gebildet wird. Das evakuierte und verschweißte Vakuumisolationspaneel wird dazu in eine Gießform eingelegt und diese anschließend mit dem flüssigen Schichtmaterial ausgegossen. Das so umgossene Vakuumisolationspaneel wird nach dem vollständigen Aushärten der Ummantelungsschicht ausgeformt. Das aufgrund der Herstellung mit Folien und Siegelnähten oftmals unförmige Vakuumisolationspaneel erhält durch die Gießform exakt definierte Dimensionen. Die Form des Vakuumisolationspaneels ist somit genau standardisierbar. Aufgrund der durch die Ummantelung exakt definierten Außenmaße des Vakuumisolationspaneels wird auch die passgenaue und praktisch spaltfreie verlegung bzw. Verbauung des Paneels möglich.

Je nach Größe der Gießform bzw. des eingelegten Vakuumisolationspaneels können variable Schichtdicken realisiert werden. Zudem ist auch die Umgießung jeder beliebigen Vakuumisolationspaneel-Form, z. B. eines mehreckigen oder runden Vakuumisolationspaneels oder aber eines Paneels mit Aussparungen oder Durchdringungen, mit dem Schichtmaterial möglich. Bei einer Ummantelung mit Polyesterharz können neben einer frei wählbaren Farbgebung über die Gussform auch Strukturen in die Ummantelungen eingebracht werden, sodass das Vakuumlsolationspaneel mit entsprechend gefärbten und strukturierten Oberflächen direkt als Fassaden- oder Innenverkleidungselement verwendet werden kann, ohne dass zusätzliche Putze oder Farbschichten aufgetragen werden müssen.

Im Zusammenhang mit dem Umgießen eines Vakuumisolationspaneels mit dem entsprechenden Schichtmaterial sieht eine Ausführungsform der vorliegenden Erfindung vor, dass die Schicht eine von der Form des Vakuumisolationspaneels abweichende Form aufweist. Es können somit auch komplexere Formgebungen, beispielsweise bei Wärmedämmsystemen oder in wärmegedämmten Transportboxen, realisiert werden, insbesondere auch genaue Kanten, Nut-Feder-Profile oder Falze an den Seitenkanten. Durch den allseitigen Auftrag der Schicht auf das Vakuumisolationspaneel wird dieses gas-und/oder flüssigkeitsdicht ummantelt, so dass die Eigenschaften des ummantelten Vakuumisolationspaneels dauerhaft erhalten bleiben. Hierbei ist es denkbar, das Vakuumisolationspaneel, neben den oben genannten Möglichkeiten des Streichens, Tauchens oder Sprühens, in eine Bitumenbahn bzw. entsprechende Abschnitte davon, in bahnförmige oder folienartige, kunststoffmodifizierte Bitumenmaterialien oder in Polyesterharzfolien einzuschlagen, um diese anschließend zu versiegeln. Eine Versiegelung erfolgt dabei entweder durch Erwärmen des Mantelmaterials oder über geeignete im oder am Hüllmaterial ein- oder angebrachte Klebstoffe. Auch vorstellbar ist das Einlegen des Vakuumisolationspaneels in einen aus dem Hüllmaterial bestehenden Beutel oder Formkörper mit anschließendem Versiegeln oder Verschweißen, analog zur Umhüllung des Stützkörpers des Vakuumisolationspaneels mit einer Hochbarrierefolie.

Bevorzugt werden mehrere Vakuumisolationspaneele eng neben- bzw, hintereinander auf einer Unterlage, insbesondere einer Bitumenbahn verklebt. Dann kann die Bitumenbahn auf einer Haspel mit z. B. einem Meter Durchmesser bei einer Paneelbreite von z. B. 0,2 Meter aufgewickelt werden, wobei die Bitumenbahn jeweils zum Zentrum hin weist. So können z. B. zwanzig oder mehr Aufwicklungen auf einer Haspel in Art einer Rollenware erfolgen, sodass dieses Gebinde einfach auf die Baustelle zu transportieren ist. Insbesondere auf einem Flachdach kann dann die Rolle ausgerollt werden, wobei die Bitumenbahn die Unterseite bildet und dann die verbleibenden Spalte mit Bitumen ausgegossen werden. Hierdurch ergibt sich eine gleichförmig geschützte Fläche, insbesondere bei einem Flachdach.

Durch die Ummantelung wird die Druckfestigkeit des fertigen Vakuumisolationspaneels bzw. der daraus gefertigten Teile oder Verkleidungen wesentlich erhöht. Es ist somit keine herkömmlicherweise zum Erreichen dieses Zweckes durchzuführende höhere Verdichtung des Dämmstoffkörpers nötig. Die dadurch bedingte Verschlechterung des Wärmedämmwertes aufgrund einer Erhöhung der Wärmeleitfähigkeit muss somit nicht befürchtet werden.

Ein weiterer Aspekt der Erfindung sieht vor, dass aus dem erfindungsgemäß ummantelten bzw. umhüllten Vakuumisolationspaneel ein Wärmedämmsystem geschaffen wird, das mehrere der wie vorstehend beschriebenen Vakuumisolationspaneele umfasst. Das Wärmedämmsystem ist dabei **dadurch gekennzeichnet, dass** die Vakuumisolationspaneele mit einer Unterlage, insbesondere mit einer Bitumenbahn, verbunden, insbesondere verklebt sind. Somit kann auf einfache Weise die hocheffektive Wärmedämmung von Dächern oder größeren Flächen durchgeführt werden, ohne dass aufwändige Konstruktionen zum Haltern der herkömmlichen Vakuumisolationspaneele oder aber das nachträgliche Verblenden oder Umschäumen der verlegten Vakuumisolationspaneele zur Verbesserung der mechanischen Belastbarkeit notwendig wird. Die ummantelten Vakuumisolationspaneele werden entweder direkt mit der Unterlage, beispielsweise der Holzverschalung eines Dachstuhles oder Flachdachaufbaus, oder aber mit den auf Unterlagen ausgelegten Bitumenbahnen verklebt oder verschweißt. Gleiches gilt für die Ränder der Paneele, sodass ein praktisch fugenloser Verbund geschaffen wird.

Je nach Zusammensetzung der Schicht kann die Verklebung oder Verschweißung bei kalter oder erwärmter Schicht erfolgen, Der Aufwand für die Wärmedämmung von Gebäuden lässt sich somit durch das erfindungsgemäße Wärmedämmsystem erheblich reduzieren, da aufgrund der Dichteeigenschaften der Schicht keine Nachbehandlung der Dämmschicht nötig ist und insbesondere bei Bitumen mit einfacher Anwendung einer Lötlampe eine vollkommen dichte (Dach-)Schicht gebildet werden kann. Dies gilt insbesondere bei Anwendung der vorstehend beschriebenen Rollenware mit einer Bitumenbahn als unterster Schicht im montierten Zustand, die beim Transport als Trägerbahn (auf einer Haspel) mit exakter Vorfixierung der Vakuumisolationspaneele dient.

Die das erfindungsgemäße Wärmedämmsystem bildenden Vakuumisolationspaneele können nur mit den Hauptflächen an der Unterlage verklebt werden. Bevorzugt wird jedoch aus den Paneelen eine fugenlose Fläche gebildet. Dies kann bereits vor dem Auftrag der Schicht erfolgen. Hierfür werden mehrere Vakuumisolationspaneele entsprechend der gewünschten Endform angeordnet und dann mit der Schicht umhüllt oder ummantelt. Darüber hinaus ist es auch möglich, die einzelnen, vollständig umhüllten oder teilweise ummantelten Vakuumisolationspaneele zu einer Fläche oder Form zusammenzusetzen, um diese dann unter Ausnutzung der Eigenschaften der Schicht zu einer fugenlosen Fläche zu fügen. Dies kann beispielsweise durch kurzes Erhitzen der jeweils aneinanderstoßenden Seitenflächen der ummantelten oder umhüllten Vakuumisolationspaneele erfolgen.

Aufgrund der Eigenschaften des Beschichtungsmaterials weist die so gebildete Fläche eine wesentlich höhere mechanische Stabilität als die unbehandelten Vakuumisolationspaneele auf. Darüber hinaus ist eine mit Bitumen oder kunststoffmodifiziertem Bitumen oder mit Polyesterharzen mit vergleichbaren Eigenschaften behandelte Fläche wasserdicht und gegenüber nicht-oxidierenden Säuren und Basen chemisch stabil. Die umhüllten oder ummantelten Vakuumisolationspaneele können somit auch in feuchten, saueren oder basischen Umgebungen, beispielsweise als Wärmedämmmaterial für Lager- oder Transportbehälter oder in Lagerräumen für entsprechende Stoffe verwendet werden. Bei der Verwendung von gefärbten Polyesterharzen lassen sich zudem verschiedenfarbige Ausgestaltungen der Beschichtung sowie der mit den Vakuumisolationspaneelen verkleideten Oberflächen realisieren.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen. Es zeigen;
- Fig. 1: eine bevorzugte Ausführungsform des Vakuumisolationspaneels;
- Fig. 2: eine schematische Darstellung eines Herstellungsverfahrens des erfindungsgemäßen Vakuumisolationspaneels; und
- Fig. 3: eine schematische Darstellung des Herstellungsverfahrens eines erfindungsgemäßen Wärmedämmsystems.

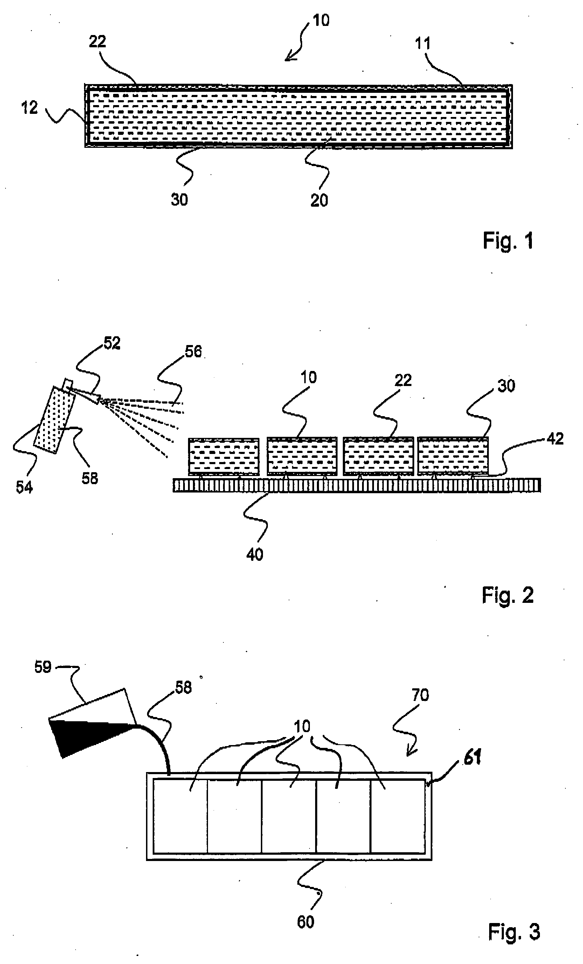

In Fig. 1 ist ein erfindungsgemäßes Vakuumisolationspaneel 10 in Schnittdarstellung gezeigt. Das Vakuumisolationspaneel 10 verfügt über einen Stützkörper 20, der aus einem mikroporösen Material, im Ausführungsbeispiel aus synthetischem Siliziumdioxid, geformt wurde. Der Stützkörper 20 gibt die Form des Vakuumisolationspaneels 10 vor und kann selbstverständlich in einer anderen Ausführung als der gezeigten plattenförmigen ausgebildet sein. Diese ist abhängig vom jeweils geplanten Einsatzgebiet des fertigen Vakuumisolationspaneels 10. Der Stützkörper 20 wurde nach dem Verpressen mit einer Folie 11 umhüllt und diese an den Seitenkanten 12 bis auf eine Evakuierungsöffnung (nicht dargestellt) verschweißt. Der so entstandene Folienbeutel wurde anschließend über die Evakuierungsöffnung evakuiert und die Evakuierungsöffnung anschließend ebenfalls versiegelt. Die überstehenden Seitenflächen wurden an den Stützkörper 20 angelegt und dort ebenfalls verschweißt. Auf den Außenflächen 22 des so umhüllten Vakuumisolationspaneels 10 wird im Ausführungsbeispiel der Fig. 1 eine Schicht 30 aus Bitumen aufgetragen. Die Schicht 30 umhüllt das Vakuumisolationspaneel 10 vollständig.

Aufgrund dieser vollständigen Umhüllung des Vakuumisolationspaneels 10 wird dieses allseitig gegen mechanische Einwirkungen geschützt. Zusätzlich verleiht die Schicht 30 dem Vakuumisolationspaneel 10 Stabilität. Die Schicht 30 weist nach Aushärten des Bitumens eine hohe Abriebfestigkeit auf, umschließt das Vakuumisolationspaneel 10 gas- und flüssigkeitsdicht und verlängert somit die Standzeiten des aus dem gezeigten Vakuumisolationspaneel 10 gebildeten Wärmedämmsystems, Selbst kleine Fremdkörper, wie Steinchen oder Scherben können in dem zähen, elastoviskosen Material der Schicht aufgenommen (absorbiert) werden. Durch diese zähelastische Eigenschaft können sogar Einstiche oder Einschnitte als Art Selbstheilung der Schicht wieder verschlossen werden.

Fig. 2 zeigt schematisch einen Teil des Verfahrens zur Herstellung von erfindungsgemäßen Vakuumisolationspaneelen. Dargestellt wird der Verfahrensschritt des Schichtauftrags auf der Außenfläche 22 der Vakuumisolationspaneele 10. In Fig. 2 wird das Auftragen der Schicht 30 dargestellt. Die Schicht 30 besteht aus einem Bitumenmaterial 58, dem zur Verbesserung der Auftragbarkeit ein Fluxmittel zugesetzt wurde und das bei Temperaturen oberhalb 100°C in flüssiger Form vorliegt. Das Bitumenmaterial 58 wird in einem beheizbaren, druckbeaufschlagten Behälter 54 bevorratet und über eine manuell betätigbare Düse 52 als Sprühnebel 56 aus dem Behälter 54 entnommen. Aufgrund der geringen Tröpfchengröße des Sprühnebels 56 kann auf dem Vakuumisolationspaneel 10 eine gleichmäßige Schicht 30 aufgetragen werden. Aufgrund der Homogenität des Bitumenmaterials 58 wird neben einem gleichmäßigen Auftrag auch eine geschlossene Schicht 30 auf dem jeweiligen Vakuumisolationspaneel 10 gebildet, die das Vakuumisolationspaneel 10 gas- und feuchtigkeitsdicht umhüllt.

Um einen Auftrag des Bitumenmaterials 58 zu erreichen, der jedes Vakuumisolationspaneel 10 allseitig umgibt, werden die Vakuumisoiationspaneele 10 vor dem Aufsprühen des Bitumenmaterials 58 auf einem Gitter 40 ausgelegt. Um eine möglichst durchgehende Benetzung der Vakuumisolationspaneele 10 zu erreichen und um die Auflageflächen auf dem Gitter 40 so gering wie möglich zu halten, weist das Gitter 40 zusätzlich vorstehende Pins 42 auf, auf denen die Vakuumisolationspaneele 10 aufgeständert werden. Während des Auftrags des Bitumenmaterials 58 wird die Düse 52 um die auf dem Gitter 40 aufgeständerten Vakuumisolationspaneele 10 herum bewegt und somit durch den über die Düse 52 aus dem Behälter 54 austretenden Sprühnebel 56 eine das jeweilige Vakuumisolationspaneel 10 vollständig umhüllende Schicht 30 gebildet. Nach dem Auftrag der Schicht 30 wird das gesamte Gitter 40 mit den aufgeständerten und beschichteten Vakuumisolationspaneelen 10 in einen Auskühl- bzw. Aushärtraum verschoben. Dort "härtet" die bituminöse Schicht 30 aus und bildet eine mechanisch belastbare und dennoch elastische Schicht 30 auf den Außenflächen 22 der Vakuumisolationspaneele 10. Durch Erwärmen der Vakuumisolationspaneele 10 wird die Viskosität der Schicht 30 bis zur Klebrigkeit erhöht, sodass die Vakuumisolationspaneele 10 mit Oberflächen aller Art verklebt werden können. Nach Erkalten der Schicht 30 härtet diese wieder aus und verfestigt dabei die Klebeverbindungen. Damit können die Paneele z.B. bei einem Flachdach zu einer durchgehenden, fugenlosen Fläche verbunden werden.

Fig. 3 zeigt ein Verfahren zur Herstellung eines Wärmedämmsystems 70 aus mehreren Vakuumisolationspaneelen 10. Diese werden dazu in eine Form 60, die die Dimensionen des fertigen Wärmedämmsystems 70, z. B. in Form einer mehrere Quadratmeter großen Wärmedämmplatte vorgibt, eingelegt. Nach dem praktisch fugenlosen Einlegen der Vakuumisolationspaneele 10 wird die Form 60 mit einem verflüssigten Bitumenmaterial 58, das je nach Bitumentyp, eventuell in einem Heizbehälter 59 bevorratet wird, ausgegossen. Als besonders vorteilhaft hat es sich erwiesen, einen bei Raumtemperatur flüssigen kunststoffmodifizierten Bitumen als Zwei-Komponenten-System als besagtes Bitumenmaterial 58 zu verwenden. Die Vakuumisolationspaneele 10 werden so allseitig mit dem Bitumenmaterial 58 umgossen. Nach Verfüllen der Form 60 bis zu einem vordefinierten Füllstand bzw. bis zum Erreichen der gewünschten Schichtdicke wird das Wärmedämmsystem 70 so lange in der Form belassen, bis das Bitumenmaterial 58 vollständig aushärtet. Anschließend wird das Wärmedämmsystem 70 ausgeformt und an den Verwendungsort verbracht. Um eine bessere Umhüllung der Vakuumisolationspaneele 10 zu erreichen, kann eine beheizbare Form notwendig sein, in der das Bitumenmaterial 58 nur langsam aushärtet. Um den Einschluss von Luftblasen zu verringern, kann die Form 60 zusätzlich auf einem Taumeltisch (nicht dargestellt) aufgestellt werden.

Zur Herstellung großflächiger, schlecht transportierbarer Wärmedämmsysteme 70 ist es denkbar, die Form 60 in Einzelteilen zum Zusammenbau vor Ort zur Verfügung zu stellen, um so ein hocheffizientes Wärmedämmsystem 70 ohne größeren logistischen Aufwand schnell und kostengünstig herstellen zu können. Die Form 60 kann am Ort der geplanten Verbauung des Wärmedämmsystems 70 aufgestellt werden. Nach der Bestückung mit Vakuumisolationspaneelen 10 kann die Form 60 mit dem ebenfalls separat angelieferten Bitumenmaterial 58 ausgegossen werden. Nach Aushärten des Bitumenmaterials 58 wird das Wärmedämmsystem 70 durch einfachen Abbau der Form 60 fertiggestellt. Das Verbinden der einzelnen Paneele 10, die mit Bitumen allseitig ummantelt sind, kann jedoch auch in handwerklicher Arbeit durch eine Lötlampe erfolgen, mit der die Ränder oder Kanten 12 kurzzeitig erhitzt werden und dadurch verschmelzen. Hierbei ist es auch möglich, in die Form 60 eine biegsame Unterlage in Form eines Netzes oder einer Bitumenbahn 61 einzulegen, auf der mehrere Vakuumisolationspaneele eng benachbart angeordnet werden, insbesondere miteinander verklebt werden. Damit lassen sich zusammenhängende passende Einheiten herstellen, z. B. in Anpassung an die Länge einer Dachschräge von beispielsweise 5 Metern, wobei die hier dargestellten Paneele 10 jeweils eine Breite von einem Meter besitzen. Damit können dann mehrere Paneele 10 als eine Einheit auf der Baustelle transportiert und montiert werden. Dabei ist es insbesondere bei schmäleren Paneelen 10 auch möglich, diese in Art eines Rollrasens auf einer Haspel mit z. B. zwanzig Lagen aufzuwickeln. Damit können die Wärmedämmpaneele dann auf einem Flachdach einfach ausgerollt werden. Die Unterlage, insbesondere eine Bitumenbahn weist jeweils zum Innern der Haspel, so dass die biegsame Bitumenbahn mit den daran befestigten, relativ schmalen Paneelen 10 aufgewickelt werden kann. Um ein Abknicken der Paneele zu vermeiden, weist die Haspel hierzu einen passenden polygonen Umfang (z.B. als Sechseck) auf, wobei mit zunehmender Lagenzahl eine Annäherung an die Zylinderform erfolgt.

### Bezugszeichenliste

- 10 =: Vakuumisolationspaneel
- 11 =: Folie/Umhüllung
- 12 =: Seitenkante
- 20 =: Stützkörper
- 22 =: Außenfläche
- 30 =: Schicht
- 40 =: Gitter
- 42 =: Pin
- 52 =: Düse
- 54 =: Behälter
- 56 =: Sprühnebel
- 58 =: Bitumenmaterial
- 59 =: Heizbehälter
- 60 =: Form
- 61 =: Bitumenbahn (Unterlage)
- 70 =: Wärmedämmsystem

## Patentansprüche

1. Vakuumisolationspaneel (10) mit einem mikroporösen Stützkörper (20) in einer gasdichten Umhüllung (11), wobei das Vakuumisolationspaneel (10) wenigstens eine zusätzliche Schicht (30) außen auf der Umhüllung (11) aufweist,
**dadurch gekennzeichnet, dass**
die Schicht (30) durch Auftrag eines elastoviskosen Materials gebildet ist, wobei die Schicht (30) das Vakuumisolationspaneel (10) allseitig ummantelt.

2. Vakuumisolationspaneel (10) nach Anspruch 1,
**dadurch gekennzeichnet, dass**
der mikroporöse Stützkörper (20) aus gefällter Kieselsäure, pyrogener Kieselsäure und/oder Aerogelen, offenzelligem Polyurethanschaum, offenzelligem Polystyrolschaum, offenzelligem Polyisocyanuratschaum, Perliten oder Fasermaterialien geformt ist.

3. Vakuumisolationspaneel (10) nach Anspruch 1 oder 2,
**dadurch gekennzeichnet, dass**
die Schicht (30) aus Bitumen, kunststoffmodifiziertem Bitumen (PmB), Epoxydharz, Polycarbonat, Acrylat, Silikon und/oder Polyesterharz besteht.

4. Vakuumisolationspaneel (10) nach Anspruch 3,
**dadurch gekennzeichnet, dass**
die aus kunststoffmodifiziertem Bitumen (PmB) hergestellte Schicht (30) aus einem bei Raumtemperatur flüssigen Zwei-Komponenten-System gebildet ist, wobei die Endviskosität bevorzugt 10⁸ Pa.s beträgt.

5. Vakuumisolationspaneel (10) nach einem der vorhergehenden Ansprüche,
**dadurch gekennzeichnet, dass**
die Schicht (30) durch Sprühen, Tauchen, Gießen und/oder Streichen auftragbar ist.

6. Vakuumisolationspaneel (10) nach einem der Ansprüche 1 bis 4,
**dadurch gekennzeichnet, dass**
die Schicht (30) durch Umgießen des Vakuumisolationspaneels (10) mit dem elastoviskosen Material gebildet ist.

7. Vakuumisolationspaneel (10) nach einem der vorhergehenden Ansprüche,
**dadurch gekennzeichnet, dass** die Schicht (30) eine von der Form des Vakuumisolationspaneels (10) abweichende Form aufweist, insbesondere an den Seitenkanten Nuten/Federprofile aus Bitumen aufweist.

8. Vakuumisolationspaneel (10) nach einem der vorhergehenden Ansprüche,
**dadurch gekennzeichnet, dass**
die Schicht (30) das Vakuumisolationspaneel (10) gas- und/oder flüssigkeitsdicht ummantelt,

9. Vakuumisolationspaneel (10) nach einem der vorhergehenden Ansprüche,
**dadurch gekennzeichnet, dass**
die Viskosität der Schicht (30) veränderbar ist, bevorzugt im Bereich von 10⁶ bis 10⁹ Pa.s.

10. Wärmedämmsystem, umfassend mehrere Vakuumisolationspaneele (10), insbesondere nach einem der Ansprüche 1 bis 9,
**dadurch gekennzeichnet, dass**
die Vakuumisolationspaneele (10) mit einer Unterlage, insbesondere mit einer Bitumenbahn (61) verbunden, insbesondere verklebt sind.

11. Wärmedämmsystem nach Anspruch 10,
**dadurch gekennzeichnet, dass**
mehrere Vakuumisolationspaneele (10) eine fugenlose Fläche ausbilden und/oder zusammen mit der Unterlage (61), insbesondere auf einer Haspel aufwickelbar sind.

12. Wärmedämmsystem nach Anspruch 10 oder 11,
**dadurch gekennzeichnet, dass**
mehrere Vakuumisolationspaneele (10) eng benachbart zueinander in einer Form (60) zu einer zusammenhängenden, biegsamen Wärmedämmplatte vergossen sind.
